Europäisches Patentamt

European Patent Office

Office européen des brevets

(19)

(11) Publication number: **0 242 771 B1**

## (12) EUROPEAN PATENT SPECIFICATION

(45) Date of publication of patent specification: **17.06.92**   (51) Int. Cl.⁵: **B29C  49/42**, B29C 49/70

(21) Application number: **87105481.3**

(22) Date of filing: **13.04.87**

(54) **Bottle-manufacturing apparatus.**

(30) Priority: **18.04.86 JP 58898/86 U**

(43) Date of publication of application:
**28.10.87 Bulletin  87/44**

(45) Publication of the grant of the patent:
**17.06.92 Bulletin  92/25**

(84) Designated Contracting States:
**DE ES FR GB IT**

(56) References cited:
**AT-A- 253 422**
**CH-A- 297 635**
**DE-A- 3 417 845**
**US-A- 1 921 393**
**US-A- 4 050 223**

(73) Proprietor: **Yamamura Glass Kabushiki Kaisha**
**2-21, Hamamatsubaracho**
**Nishinomiya Hyogo Prefecture(JP)**

(72) Inventor: **Doi, Hiromitsu**
**19-44-208, Ishizaicho**
**Nishinomiya, Hyogo(JP)**
Inventor: **Arita, Keiji**
**1034-3, Nagatake Tsukuicho**
**Tsukui-gun, Kanagawa(JP)**

(74) Representative: **TER MEER - MÜLLER - STEIN-**
**MEISTER & PARTNER**
**Mauerkircherstrasse 45**
**W-8000 München 80(DE)**

EP 0 242 771 B1

## Description

The present invention relates to a bottle-manufacturing apparatus in particular to a device for adjusting the height of a bottom plate of a blow mold and the height of a mechanism for taking a molded bottle out of the blow mold.

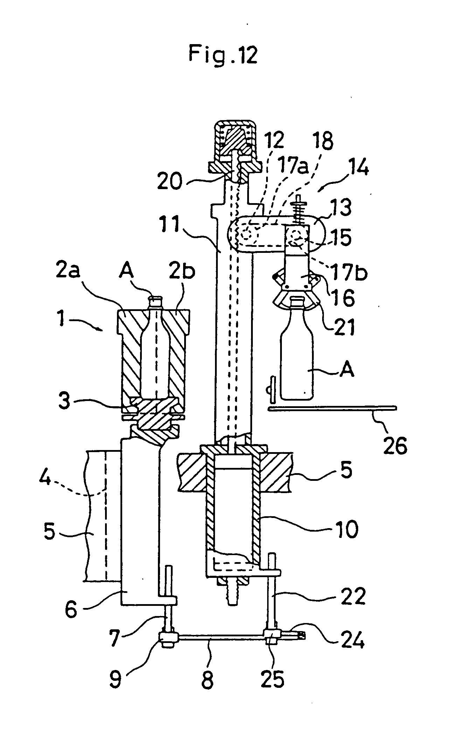

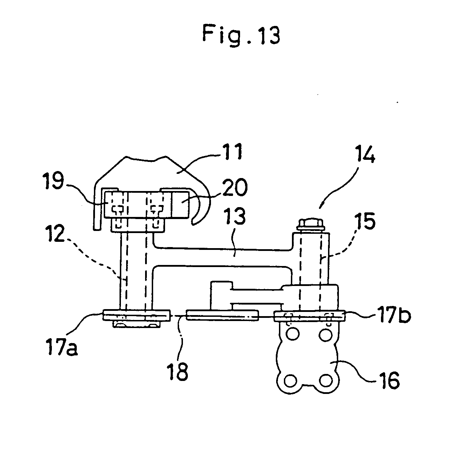

A prior art bottle-manufacturing apparatus, on which the preamble of claim 1 is based, is shown in figures 12 and 13.

A blow mold 1 of a bottle-manufacturing apparatus has been composed of a pair of dividable and movable mold bodies 2a,2b and a bottom plate 3 held between bottom portions of said dividable and movable mold bodies. And, said bottom plate 3 is mounted on a bracket 6 mounted on an body 5 of the bottle-manufacturing apparatus slidably in the up and down direction by means of a slide-holding mechanism 4 such as a dovetail groove. Reference numeral 7 designates a screw shaft for sliding the bracket 6 and is mounted on said body 5 of the apparatus rotatably. Reference numeral 8 designates an operating shaft installed in the direction meeting at right angles with the screw shaft 7, reference numeral 9 designating a rotating driving mechanism comprising a worm, a worm-gear and the like for transmitting the rotation of said operating shaft 8 to the screw shaft 7.

Reference numeral 10 designates an air cylinder slidably mounted on said body 5 of the apparatus in the up and down direction, from which a support member 11 fixedly stands, said support member 11 being provided with a supporting shaft 12, and a tong-arm 13 being pivoted on said supporting shaft 12 at an end portion thereof, whereby constructing a take out mechanism 14 for taking a bottle A molded in said blow mold 1 out of the blow mold 1.

Said tong-arm 13 is provided with a tong-head 16 rotatable by means of a shaft 15 at the other end thereof, a chain 18 being extended around a sprocket wheel 17a fixedly mounted on said supporting shaft 12 and a sprocket wheel 17b supported by the shaft 15 and provided with the tong-head 16 fixedly mounted thereon. 19 designates a gear fixedly mounted on the tong-arm 13. 20 designates a rack engaged with the gear 19 and moved up and down by means of a piston of said air cylinder 10. 21 designates a tong mounted on the tong-head 16 and adapted to hold a mouth portion of the bottle A molded in the blow mold 1.

Reference numeral 22 designates a screw shaft mounted on the air cylinder 10 so as to be rotatable on said body 5 of the apparatus. 24 designates an operating shaft by which the screw shaft 22 is rotated through a rotating driving mechanism 25 comprising a worm, a worm-gear and the like. 26 designates a conveyor device for transferring the molded bottle.

With the above described construction, upon finishing the molding of the bottle in the blow mold 1, the rack 20 is moved by means of the air cylinder 10 to rotate the gear 19. Then, since the gear 19 is fixedly mounted on the tong-arm 13, the tong-arm 13, which was over the conveyor 26, is rotated by about 180° to be moved toward the blow mold 1. In this time, since the supporting shaft 12 is not rotated and the sprocket wheel 17a fixedly mounted on the supporting shaft 12 holds the sprocket wheel 17b together with the tong-head 16 in the same direction as the supporting shaft 12 through the chain 18, the tong-head 16 moves under a suspended condition to put the mouth portion of the bottle A between the tong 21 thereof.

Subsequently, the piston of the air cylinder 10 turns the gear 19 in the reverse direction by means of the rack 20 to move the tong-arm 13 to the position over the conveyor 26, whereby placing the bottle held between the tong 21 on the conveyor device 26.

In the event that the blow mold 1 is exchanged to change the kind of the bottle to be manufactured, the bottom plate 3 of the blow mold 1 is mounted on the bracket 6. And, the operating shaft 8 is rotated to move the bracket 6 up and down, whereby adjusting the bottom plate3 in height so as to be suitable for the mold bodies 2a, 2b. In addition, the screw shaft 22 is rotated by means of the operating shaft 24 to move the air cylinder 10 up and down, whereby adjusting the height of the tong 21 suitable for holding the mouth portion of the bottle A molded in the blow mold 1.

As above described, it is required to adjust heights of the bottom plate 3 and the tong 21 according to the kind of the blow mold 1 when the blow mold 1 is exchanged in the bottle-manufacturing apparatus, but they have been adjusted by directly rotating the operating shafts 8, 24 for adjusting the heights of the bottom plate 3 and the tong 21 by the operator separately using a tool, such as a spanner, or a nut runner or the like. And, the height of the bottom plate 3 is set by fitting it visually for the mold bodies 2a, 2b while the height of the tong 21 is visually set so as to be suitable for holding the mouth portion of the bottle A by the tong 21. Besides, the operating shafts 8, 24 are arranged over an end portion of the bottle-manufacturing apparatus and the conveyor device 26 is positioned over the operating shafts 8, 24.

Accordingly, in order to rotate the operating shafts 8, 24, it is necessary for the operator to enter a space under the conveyor device 26, so that the workability is bad and the positions of the bottom plate 3 and the tong 21 are difficult to observe. Thus, a problem occurs in that the adjustment of the bottom plate 3 and the tong 21 in

height takes considerably long time. And, since it is necessary for the operating shafts 8, 24 to be rotated separately for every blow mold 1, in a bottle-manufacturing apparatus comprising a large number of blow moldsl it takes a considerably long time to adjust the bottom plate 3 and the take out mechanism l4 in height and it takes a long time to exchange molds in the bottle-manufacturing apparatus.

It is an object of the present invention to provide a bottle-manufacturing apparatus capable of improving the workability of rotating operating shafts and simultaneously rotating a plurality of operating shafts, whereby remarkably shortening the time required for controlling the bottom plate and the take out mechanism in height.

According to the present invention, this object is achieved with the features indicated in claim 1.

Further embodiments of the invention are specified in the dependent claims.

A preferred embodiment of the present invention is shown in Figs. 1 to 11 of the drawing, in which

Fig. 1 is a plan view showing pricipal parts;

Fig. 2 is a front view showing the pricipal parts;

Fig. 3 is a front view showing a blow mold and a take out mechanism;

Fig. 4 is a front view showing a holder of a lever;

Fig. 5 is a sectional view showing a driving shaft portion;

Fig. 6 is a side view showing a motor portion;

Fig. 7 is a front view showing the motor portion;

Fig. 8 is a side sectional view showing the lever portion;

Fig. 9 is a front sectional view showing the lever portion;

Fig. 10 is a sectional view showing a clutch portion;

Fig. 11 is a side view showing a screw shaft portion of a conveyor device;

Fig. 12 is a front view showing a conventional bottle-manufacturing apparatus; and

Fig. 13 is a plan view showing a part of Fig. 12.

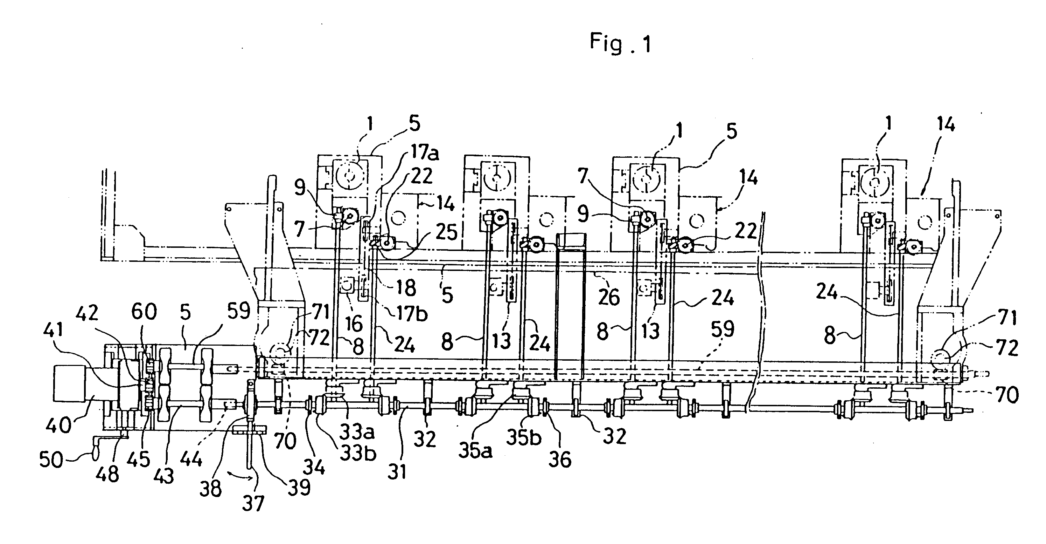

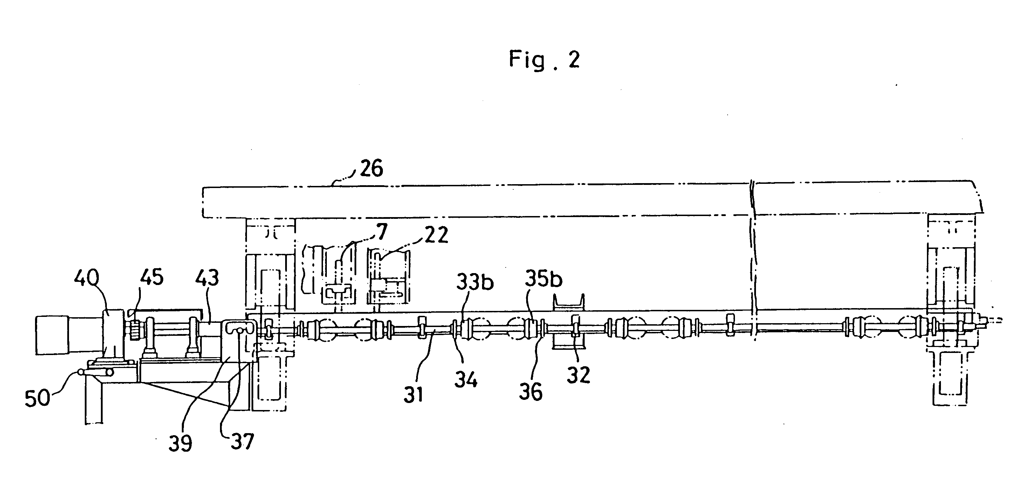

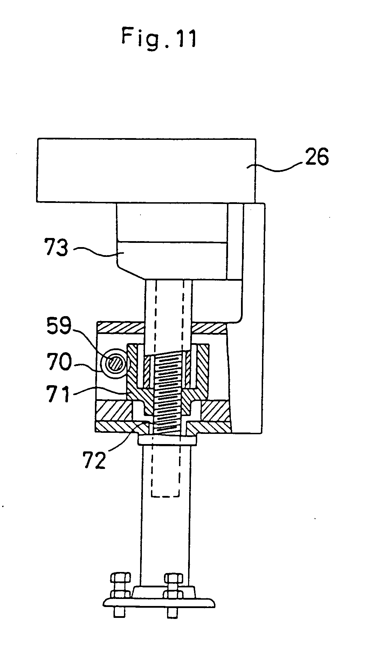

The preferred embodiment of a bottle-manufacturing apparatus according to the present invention is described with reference to Figs. 1 to 11.

Since in Figs. 1 to 11 reference numerals 1 to 26 are same as in the conventional example described with reference to Figs. 12,13, the detailed description of reference numerals 1 to 26 is omitted.

Reference numeral 31 designates a horizontal driving shaft installed on the ends of the operating shafts 8,24 in the direction meeting at right angles with them and mounted on the body 5 of the apparatus by means of a bearing 32 so as to be slidable in the direction of an axis of shaftline thereof. 33a designates a bevel gear fixedly mounted on an end portion of the operating shaft 8, a bevel gear 33b engaging with said bevel gear 33a being idly mounted on the driving shaft 31. 34 designates a clutch fixedly mounted on the driving shaft 31 for engaging and disengaging the bevel gear 33b with the driving shaft 31.

35a designates a bevel gear fixedly mounted on an end portion of the operating shaft 24, a bevel gear 35b engaging with the bevel gear 35a being idly mounted on the driving shaft 31. 36 designates a clutch fixedly mounted on the driving shaft 31 for engaging and disengaging the bevel gear 35b with the driving shaft 31.

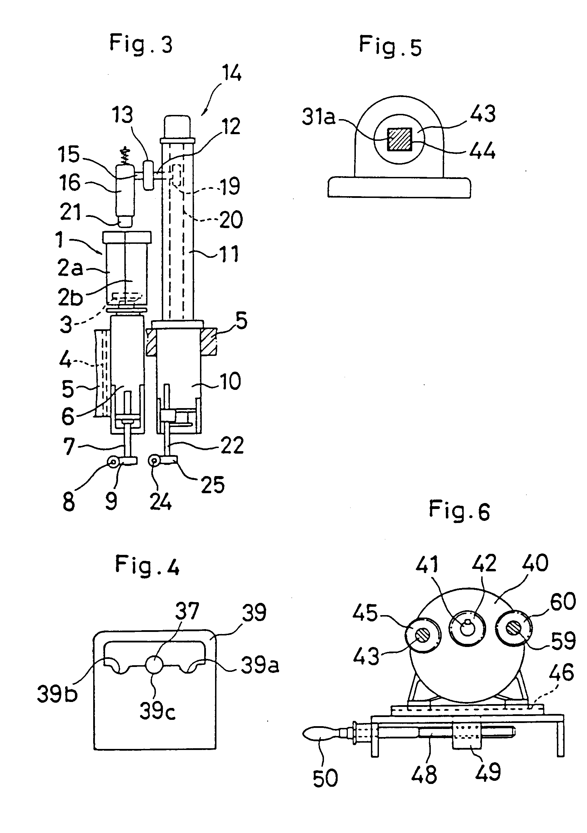

37 designates a lever as a slide means fixedly mounted on a fixture 38, which is swingably mounted on the body 5 of the apparatus at an end portion thereof, at one end thereof, the driving shaft 3l being slid in the direction of an axis of shaftline thereof through the fixture 38 by swinging the lever 37. 39 designates a holder of the lever 37 adapted to hold the lever 37 at an appointed position by selectively inserting the lever 37 into three dented portions 39a, 39b, 39c formed therein (see FIG. 4).

40 designates a motor, a driving gear 42 being mounted on a shaft 4l of said motor 40. 43 designates a driving shaft mounted on the body 5 of the apparatus with making the driving shaft 3l almost coincide therewith in axis of shaftline, a connecting end portion 3la having a square section and installed on the driving shaft 3l being inserted into a connecting hole 44 having a square section and installed on an end portion of the driving shaft 43 so as to be rotatable together with the driving shaft 43 and slidable in the direction of an axis of shaftline (see FIG. 5). 45 designates a driven gear mounted on the other end of the driving shaft 43 so as to be engageable with said driving gear 42.

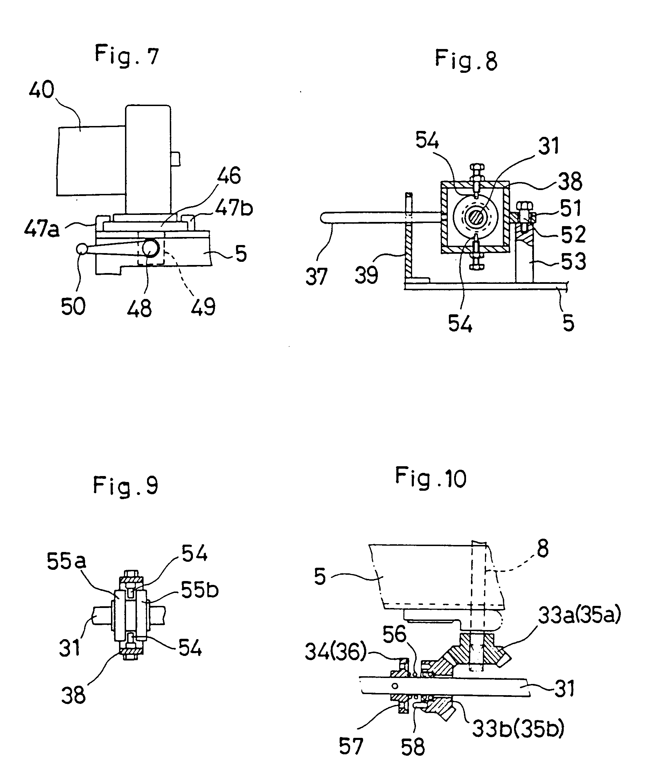

And, said motor 40 is mounted on a support plate 46, as shown in FIGS. 6, 7, said support plate 46 being held by guide rails 47a, 47b at end edges on both sides thereof and mounted on the body 5 of the apparatus slidably in the radial direction of the driving shaft 43. 48 designates a screw shaft mounted on the body 5 of the apparatus in the radial direction of the driving shaft 43 and adapted to be capable of engaging and disengaging the driving gear 42 with the trailing gear 45 by engaging said screw shaft 48 with a nut member 49 fixedly mounted on the support plate 46 and rotating the screw shaft 48 with a handle 50 to reciprocate the motor 40.

Said fixture 38 is formed in a frame-like shape and mounted on a support member 53, which is installed on the body 5 of the apparatus by means of a pin 52 through a fixture hole 5l formed in an end portion thereof, so as to be swingable and movable up and down, as shown in FIGS. 8, 9. 54 designates engaging pins projecting from an inner side of the fixture 38 oppositely and inserted into a space between a pair of bearings 55a, 55b mounted on the driving shaft 3l in spaced-apart relation. Accordingly, upon swinging the fixture 38 by means of the lever 37, the driving shaft 3l is slid.

In addition, as shown in Fig. 10 said clutches 34, 36 are unrotatably mounted on the driving shaft 3l in slightly spaced-apart relation from the bevel gears 33b, 35b and a spring 56 is disposed between the bevel gears 33b, 35b and the clutches 34, 36, respectively. The clutches 34,36 are provided with a plurality of engaging holes 57 parallel to the driving shaft 3l arranged with regular pitches on a circumference with a center of the driving shaft 3l as a center on a circumferential edge portion (in the preferred embodiment twenty engaging holes 57 are formed). On the other hand, the bevel gears 33b, 35b are provided with at least one (in the preferred embodiment one) engaging pin 58 to be inserted into the engaging hole 57 projecting therefrom. Referring to FIGS. l, 2, since the lever 37 is put in the dented portion 39c of the holder 39, the clutches 34, 36 take a neutral state in which they are separated from the bevel gears 33b, 35b, respectively. Upon putting the lever 37 in the dented portion 39a, the clutch 34 is brought into contact with the bevel gear 33b. In this time, the engaging pin 58 is inserted into the engaging hole 57 and the rotation of the driving shaft 3l is transmitted to the bevel gear 33b through the clutch 34. In addition, since the engaging pin 58 is held by a spring (not shown), in the event that the position of the engaging pin 58 is not adjusted to that of the engaging hole 57 when the clutch 34 is brought into contact with the bevel gear 33b, a head portion of the engaging pin 58 is pressed by the bevel gear 33b, whereby the engaging pin 58 is sunk in the clutch 34. When the clutch 34 is slightly rotated together with the driving shaft 3l whereby the position of the engaging pin 58 coincides with that of the engaging hole 57, the engaging pin 58 is projected to be engaged with the engaging hole 57, so that the combination of the clutch 34 with the bevel gear 33b as well as the sliding of the driving shaft 3l by means of the lever 37 can be smoothly carried out. The products on the market (for example a spring plunger Model SP-l2-3-R manufactured by JIEC Industries, Inc.) can be used as such the engaging pin 58.

59 designates a rotation axis mounted on the body 5 of the apparatus almost in parallel to the driving shaft 3l for adjusting the up and down position of the conveyor device 26. The rotation axis 59 is provided with a driven gear 60 at an end portion thereof so as to be engageable with the driving gear 42, the driving gear 42 being adapted to be capable of being engaged and disengaged with the driven gear 60 by the movement of the motor 40. 70 designates a worm fixedly mounted on the rotation axis 59 and adapted to be engaged with a worm wheel 7l (see FIG. ll). The worm wheel 7l is threaded on an inside circumference thereof and engaged with a screw shaft 72. The screw shaft 72 is fixedly mounted on a supporting member 73 of the conveyor device 26. Upon rotating the rotation axis 59, the worm 70 and the worm wheel 7l are rotated, whereby the screw shaft 72, which is engaged with the worm wheel 7l, is moved up and down. Accordingly, the supporting member 73 fixedly mounted on the screw shaft 72 and further the conveyor device 26 are moved up and down.

With the above described construction, in the event that the blow mold 1 is exchanged and the bottom plate 3 thereof and the bottle take out mechanism l4 are adjusted in height, the screw shaft 48 is rotated by means of the handle 50 and the motor 40 is moved toward a side of the driving shaft 3l to make the driving shaft gear 42 engage with the driven gear 45. The lever 37 is moved in the direction of going away from the motor 40, whereby the bevel gear 33b is engaged with the driving shaft 3l through the clutch 34 and the lever 37 is put in the dented portion 39a of the holder 39. And, the driving shaft 3l is rotated by means of the motor 40 to rotate the screw shaft 7 through the bevel gears 33b, 33a, the operating shaft 8 and the rotating driving mechanism 9, whereby moving the bottom plate 3 in the up and down direction together with the bracket 6 to adjust the height of the bottom plate 3 to that of the bodies 2a, 2b of the mold.

Subsequently, the lever 37 is moved to a side of the motor 40 to combine the bevel gear 35b with the driving shaft 3l through the clutch 36 and put the lever 37 in the dented portion 39b of the holder 39. Then, the driving shaft 3l is rotated by means of the motor 40 to rotate the screw shaft 22 through the bevel gears 35b, 35a, the operating shaft 24 and the rotating driving mechanism 25, whereby moving the take out mechanism l4 in the up and down direction to adjust the height of the tong 2l to that of the bottle in the blow mold l.

After the adjustment was finished, the lever 37 is put in a neutral state. In addition, the driving gear 42 of the motor 40 is for example disengaged with the driven gear 45. And, in the above described adjustment a plurality of operating shafts 8 and the operating shafts 24 are simultaneously rotated to be controlled, but when the lever 37 is in a neutral state, that is to say the lever 37 is put in the holder 39c, the operating shafts 8, 24 can be individually rotated in the same manner as in the conventional apparatus, so that a fine regulation can also be carried out to cancel the difference among the sections.

In the event that it is required to control the height of the conveyor device 26 in combination with the control of said bottom plate 3 and said take out mechanism l4, the motor 40 is moved by operating the handle 50 to engage the driving gear 42 thereof with the driven gear 60, whereby rotating the rotation axis 59 by means of the motor 40. Thereupon, since the rotation axis 59 is rotated to rotate the worm 70 and the worm wheel 7l, whereby the screw shaft 72 can be moved up and down together with the supporting member 73 and the conveyor device 26 to adjust the height of the conveyor device 26 to that of the take out mechanism l4, the bottle held between the tong 2l can be stably placed on the conveyor device 26.

As above described, according to the present invention the operating shafts for adjusting the height of the bottom plate and the operating shafts for adjusting the height of the take out mechanism are each alternatively rotated by means of one driving shaft and the driving shaft is driven by a motor. Accordingly, the switching-over operation of the motor can be carried out at nearly optional place without entering a space under the conveyor at all, so that the height adjustment of the bottom plate and the take out mechanism can be visually, easily and accurately carried out, that is to say the workability is remarkably improved and an accurate height adjustment can be achieved. In addition, since it is necessary for the change-over between the height adjustment of the bottom plate and the take out mechanism, only to slide the driving shaft by means of the slide means, the operation of the bottle-manufacturing apparatus according to the present invention is easy and efficient.

And, in a bottle-manufacturing apparatus provided with a plurality of operating shafts for bottom platesand a plurality of operating shafts for take out mechanisms they can be simultaneously rotated to adjust their heights. Accordingly, also the time required for the control of the bottom plate and the take out mechanism in a bottle-manufacturing apparatus provided with many sections can be remarkably shorter than that required for one section and the time required for exchanging a mold in the bottle-manufacturing apparatus can be remarkably shortened, whereby increasing the bottle-manufacturing efficiency.

## Claims

1. A bottle-manufacturing apparatus comprising a blow mold (1) and a take out mechanism (14) for taking a bottle formed In said blow mold out of the blow mold, wherein said blow mold and said take out mechanism are individually movable up and down to be adjusted in height, and an operating shaft (8) is provided for adjusting the height of a bottom plate (3) of said blow mold, and an operating shaft (24) is provided for adjusting the height of said take out mechanism, **characterized** in that said operating shafts (8,24) are provided with a rotating driving mechanism (33a,33b,35a,35b) and in that the apparatus comprises a driving shaft (31) which is rotatable in anyone of normal and reverse directions and is selectively connectable to said operating shafts (8,24) through said rotating driving mechanism for individually rotating each of said operating shafts.

2. A bottle-manufacturing apparatus as set forth in claim 1, in which said rotating driving mechanism comprises bevel gears (33a,35a) mounted on said operating shaft (8) for adjusting the height of said bottom plate (3) and on said operating shaft (24) for adjusting the height of said take out mechanism (14), a bevel gear (33b,35b) idly mounted on said driving shaft (31) and engaged with said bevel gears (33a,35b) on said operating shafts and a clutch (34,36) mounted on said driving shaft (31) for selectively engaging or disengaging said idly rotatable bevel gears with said driving shaft by sliding said driving shaft.

3. A bottle-manufacturing apparatus as set forth in claim 1 or 2, in which an end portion of said driving shaft (31) is connected to a shaft (41) of a motor (40) rotatable either in the normal direction or in the reverse direction, said driving shaft (31) being rotatable together with said shaft (41) of said motor but being slidable relative thereto in a direction of an axis of shaftline thereof.

4. A bottle-manufacturing apparatus as set forth in anyone of the preceding claims, wherein said operating shaft (8) for adjusting the height of said bottom plate (3) extends in a horizontal direction and is connected through a rotating driving mechanism (9) with a screw shaft (7) for moving up and down a bracket (6) on which said bottom plate (3) is installed, and wherein said operating shaft (24) for adjusting the height of said take out mechanism (14) extends in a horizontal direction and is connected through a rotating driving mechanism (25) to a screw shaft (22) for moving said take out mechanism (14) up and down.

5. A bottle-manufacturing apparatus as set forth in anyone of the preceding claims, comprising a plurality of blow molds (1) and a plurality of take out mechanisms (14), each of said blow molds and take out mechanisms being provided with an operating shaft (8,24) for height adjustment, wherein said plurality of operating shafts (8) for adjusting the height of the blow molds (3) and said plurality of operating shafts (24) for adjusting the heights of the take out mechanisms, respectively, are simultaneously connectable to said driving shaft (31).

**Revendications**

1. Dispositif pour la fabrication de bouteilles comprenant un moule de soufflage (1) et un mécanisme d'enlèvement (14) pour retirer une bouteille formée dans ledit moule de soufflage hors dudit moule de soufflage, dans lequel ledit moule de soufflage et ledit mécanisme d'enlèvement peuvent être déplacés individuellement vers le haut et vers le bas de façon à être ajustés en hauteur, et un arbre d'actionnement (8) est prévu pour ajuster la hauteur d'une plaque de base (3) dudit moule de soufflage, et un arbre d'actionnement (24) est prévu pour ajuster la hauteur dudit mécanisme d'enlèvement, caractérisé en ce que lesdits arbres d'actionnement (8, 24) sont munis d'un mécanisme d'entraînement en rotation (33a, 33b, 35a, 35b) et en ce que le dispositif comprend un arbre d'entraînement (31) qui peut être entraîné en rotation dans l'un ou l'autre des sens normal et inverse et peut être relié sélectivement auxdits arbres d'actionnement (8, 24) par ledit mécanisme d'entraînement en rotation pour faire tourner individuellement chacun desdits arbres d'actionnement.

2. Dispositif pour la fabrication de bouteilles selon la revendication 1, dans lequel ledit mécanisme d'entraînement en rotation comprend des engrenages coniques (33a, 35a) montés sur ledit arbre d'actionnement (8) pour ajuster la hauteur de ladite plaque de base (3) et sur ledit arbre d'actionnement (24) pour ajuster la hauteur dudit mécanisme d'enlèvement (14), un engrenage conique (33b, 35b) monté de façon folle sur ledit arbre d'entraînement (31) et en engagement avec lesdits pignons coniques (33a, 35b) sur lesdits arbres d'actionnement et un embrayage (34, 36) monté sur ledit arbre d'entraînement (31) pour mettre en prise ou dégager de façon sélective lesdits pignons coniques tournant de façon folle dudit arbre d'entraînement par coulissement dudit arbre d'entraînement.

3. Dispositif pour la fabrication de bouteilles selon la revendication 1 ou 2, dans lequel une portion d'extrémité dudit arbre d'entraînement (31) est reliée à un arbre (41) d'un moteur (40) pouvant tourner soit dans un sens normal soit dans le sens inverse, ledit arbre d'entraînement (31) pouvant être entraîné en rotation en même temps que ledit arbre (41) dudit moteur mais pouvant coulisser par rapport à lui dans la direction de son axe.

4. Dispositif pour la fabrication de bouteilles selon l'une quelconque des revendications précédentes, dans lequel ledit arbre d'actionnement (8) pour ajuster la hauteur de ladite plaque de base (3) s'étend dans une direction horizontale et est relié par un mécanisme d'entraînement en rotation (9) à un arbre fileté (7) pour faire monter et descendre une console (6) sur laquelle est installée ladite plaque de base (3), et dans lequel ledit arbre d'actionnement (24) prévu pour ajuster la hauteur dudit mécanisme d'enlèvement (14) s'étend dans la direction horizontale et est relié par un mécanisme d'entraînement en rotation (25) à un arbre fileté (22) pour faire monter et descendre ledit mécanisme d'entraînement (14).

5. Dispositif pour la fabrication de bouteilles selon l'une quelconque des revendications précédentes, comprenant une pluralité de moules de soufflage (1) et une pluralité de mécanismes d'enlèvement (14), chacun desdits moules de soufflage et desdits mécanismes d'enlèvement étant muni d'un arbre d'actionnement (8, 24) pour l'ajustement en hauteur, ladite pluralité d'arbres d'actionnement (8) pour ajuster la hauteur des moules de soufflage (3) et ladite pluralité d'arbres d'actionnement (24) pour ajuster la hauteur des mécanismes d'enlèvement, respectivement, pouvant être reliés simultanément audit arbre d'entraînement (31).

**Patentansprüche**

1. Vorrichtung zur Herstellung von Flaschen mit einer Blasform (1) und einem Entnahmemechanismus (14) zur Entnahme einer in der Blasform geformten Flasche aus der Form, bei der die Blasform und der Entnahmemechanismus zum Zweck der Höheneinstellung einzeln aufwärts und abwärts bewegbar sind, und bei der eine Betätigungswelle (8) für die Höheneinstellung einer Bodenplatte (3) der Blasform und eine Betätigungswelle (24) für die Höheneinstellung des Entnahmemechanismus vorgesehen ist, dadurch **gekennzeichnet,** daß die Betätigungswellen (8,24) mit einem Drehantriebsmechanismus (33a,33b,35a,35b) versehen sind und daß die Vorrichtung eine Antriebswelle (31) aufweist, die in beiden Drehrichtungen drehbar ist und durch den Drehantriebsmechanismus selektiv mit den Betätigungswellen (8,24) verbindbar ist, um jede der Betätigungswellen einzeln zu drehen.

2. Vorrichtung zur Herstellung von Flaschen nach Anspruch 1, bei der der Drehantriebsmechanismus Kegelräder (33a,35a) aufweist, die auf der Betätigungswelle (8) für die Höheneinstellung der Bodenplatte (3) und auf der Betätigungswelle (24) für die Höheneinstellung des Entnahmemechanismus (14) angeordnet sind, ein Kegelrad (33b,35b) freilaufend auf der Antriebswelle (31) montiert ist und mit den Kegelrädern (33a,35b) auf den Betätigungswellen in Eingriff steht und eine Kupplung (34,36) auf der Antriebswelle (31) montiert ist, durch welche die freilaufenden Kegelräder selektiv mit der Antriebswelle koppelbar und entkoppelbar sind, indem die Antriebswelle verschoben wird.

3. Vorrichtung zur Herstellung von Flaschen nach Anspruch 1 oder 2, bei der ein Endabschnitt der Antriebswelle (31) mit einer Welle (41) eines entweder in Normalrichtung oder in Gegenrichtung drehenden Motors (40) verbunden ist und die Antriebswelle (31) zusammen mit der Welle (41) des Motors drehbar, Jedoch in Axialrichtung relativ zu dieser verschiebbar ist.

4. Vorrichtung zur Herstellung von Flaschen nach einem der vorstehenden Ansprüche, bei der die Betätigungswelle (8) für die Höheneinstellung der Bodenplatte (3) waagerecht verläuft und über einen Drehantriebsmechanismus (9) mit einer Spindel (7) zum Aufwärts- und Abwärtsbewegen einer Halterung (6), an der die Bodenplatte (3) montiert ist, verbunden ist, und bei der die Betätigungswelle (24) für die Höheneinstellung des Entnahmemechanismus (24) waagerecht verläuft und über einen Drehantriebsmechanismus (25) mit einer Spindel (22) für die Aufwärts- und Abwärtsbewegung des Entnahmemechanismus (14) verbunden ist.

5. Vorrichtung zur Herstellung von Flaschen nach einem der vorstehenden Ansprüche, mit mehreren Blasformen (1) und mehreren Entnahmemechanismen (14), bei der jede Blasform und jeder Entnahmemechanismus mit einer Betätigungswelle (8,24) für die Höheneinstellung versehen ist und die mehreren Betätigungswellen (8) für die Höheneinstellung der Blasformen (3) und die mehreren Betätigungswellen (24) für die Höheneinstellung der Entnahmemechanismen jeweils simultan mit der Antriebswelle (31) verbindbar sind.

Fig . 1

Fig . 2

Fig.3

14
13
12
15
16
19
21
20
1
2a
11
2b
3
5
4
5
10
6
7
22
8  9  24
25

Fig.5

31a
43
44

Fig.4

37  39
39a
39b
39c

Fig.6

41  42  40
45
60
43
59
46
50  48  49

Fig. 7

Fig. 8

Fig. 9

Fig. 10

Fig.11

Fig.12

Fig.13